# EUROPÄISCHE PATENTANMELDUNG

(11) **EP 3 620 699 A1**
(43) Veröffentlichungstag der Anmeldung: **11.03.2020**
(21) Anmeldenummer: 19190201.4
(22) Anmeldetag: 06.08.2019
(51) Int. Cl.: F16K 1/44, F16K 1/54

(54) **GASVENTIL**

(30) Priorität: 07.09.2018 DE 102018121844
(71) Anmelder: Vaillant GmbH, 42859 Remscheid (DE)
(72) Erfinder: Wodtke, Matthias, 42119 Wuppertal (DE); Schürbrock, Uwe, 42697 Solingen (DE)
(74) Vertreter: Popp, Carsten

(57) **Zusammenfassung**

Die Erfindung betrifft ein Gasventil umfassend einen ersten Ventilkopf 4 der mittels eine Ventilschafts 9 axial kontinuierlich verstellbar ist und so mit einem Rohr 19 zusammenwirkt, dass zwischen einer ersten Innenkontur 16 des Rohres 19 und einer ersten Außenkontur 18 des ersten Ventilkopfes 4 ein erster Ringspalt 6 gebildet wird, wobei die erste Innenkontur 16 und die erste Außenkontur 18 so geformt sind und so zusammenwirken, dass sich mit axialer Bewegung des Ventilschafts 9 in eine Öffnungsrichtung 21 die Querschnittsfläche des ersten Ringspalts 6 vergrößert. Erfindungsgemäß weist der erste Ventilkopf 4 eine Bohrung 20 auf, in der koaxial ein zweiter Ventilkopf 3 eingebracht ist. Der zweite Ventilkopf 3 ist mittels des Ventilschafts 9 axial verstellbar und wirkt so mit der Bohrung 20 zusammen, dass zwischen der zweiten Innenkontur 15 der Bohrung 20 und der zweiten Außenkontur 17 des zweiten Ventilkopfes 3 ein zweiter Ringspalt 5 gebildet wird. Dabei sind die zweite Innenkontur 15 und die zweite Außenkontur 17 so geformt und wirken so zusammen, dass sich mit axialer Bewegung des Ventilschafts 9 in Öffnungsrichtung 21 die Querschnittsfläche des zweiten Ringspalts 5 vergrößert..

## Beschreibung

Die Erfindung betrifft ein Gasventil, das beispielsweise in gasbefeuerten Heizgeräten Anwendung findet. Die Erfindung optimiert die Funktion eines schrittmotorbetriebenen Stellventils, das innerhalb einer Gasarmatur den Gasvolumenstrom dosiert durch die Form des Ventilkopfes und seiner Position im Ventilsitz gemäß dem Oberbegriff des Anspruchs 1.

Ein gasbefeuertes Heizgerät ist eine Gasanlage mit einer Gasexplosionsgefahr. Innerhalb eines gasbefeuerten Heizgerätes wird eine Gasarmatur zur definierten Dosierung von Brenngas in die Verbrennungsluft verwendet. Das Verhältnis von Gas zu Luft ist hierbei maßgeblich für den sowohl stabilen als auch emissionsarmen Betrieb gemäß geltender Normen verantwortlich. Zudem sind hohe Anforderungen an die Sicherheit und Zuverlässigkeit der Gasarmatur erforderlich und daher enthalten die Gasarmaturen ein Sicherheitsventil und ein Hauptventil. Dabei ist das Hauptventil ein modulierendes Gasventil, das Gas mit einer oder mehreren mittleren Strömungsraten zwischen der vollständig geöffneten Position und der vollständig geschlossenen Position strömen lässt.

Aus der DE 19821853 C1 ist ein Gasregelgerät mit einem Ventilgehäuse bekannt, wobei das Ventilgehäuse einen Einlass für Gas sowie einen Auslass für Gas aufweist. Das aus diesem Stand der Technik bekannte Gasregelgerät verfügt weiterhin über ein als Sicherheitsventil ausgebildetes erstes Ventil, ein als Hauptgasventil ausgebildetes zweites Ventil, sowie zwei Druckregler, nämlich einen Servodruckregler sowie einen Gleichdruckregler, wobei der Servodruckregler ein Servogasventil umfasst. Aus der DE 19821853 C1 ist es bekannt, dass das erste Ventil und das Servogasventil jeweils einen mit einem Ventilsitz zusammenwirkenden Ventilkörper aufweisen. Jeder dieser Ventilkörper ist in Schließrichtung durch eine Federkraft in Richtung auf den jeweiligen Ventilsitz bewegbar, weiterhin ist jeder dieser Ventilkörper in Öffnungsrichtung entgegen der jeweiligen Federkraft vom jeweiligen Ventilsitz abhebbar. Nach der DE 19821853 C1 ist einerseits dem ersten Ventil und andererseits dem Servogasventil jeweils eine separate, elektromagnetische Spule zur Betätigung des jeweiligen Ventilkörpers in Öffnungsrichtung zugeordnet. Es ist auch möglich, dass ein Gasregelgerät nur einen Druckregler umfasst.

Die Erfindung aus der DE10318569 B3 betrifft ein integriertes Gasregel- und Sicherheitsventil für Brenner einer modulierbaren Gasheizeinrichtung, dass zur Anpassung an eine veränderliche Wärmelast und zur schlagartigen Abschaltung des Brenngasstromes, insbesondere bei zur Wohnraumbeheizung und Warmwasserversorgung eingesetzten Gasthermen, Verwendung findet. Der eingesetzte Linearantrieb ist von einem Schrittmotor angetrieben.

In beiden Dokumenten ist das Ventil mit einem Ventilkopf einer herkömmlichen Drosselkonstruktion versehen.

In der Praxis hat sich bewährt und wird häufig verwendet eine Gasarmatur, welche ein elektrisch betätigtes Ein / Aus Sicherheitsventil, ein mit einem Schrittmotor dosierbaren Gasventil und optional einen integrierten Gasdruckregler umfasst. Das zweite Sicherheitsmerkmal wird durch die im Schrittmotor implementierte Sicherheitsspule bereitgestellt. Diese funktioniert wie eine elektromagnetische Kupplung.

Insbesondere durch den Einsatz von Schrittmotoren ist eine digitale Ansteuerung des Gasventils möglich geworden. Für eine feinfühlige Steuerung wird eine sehr große Auflösung der Linearbewegung in viele einzelne Motorschritte erreicht. Die Regulierung des Gasvolumenstroms erfolgt bei den gängigen Gasventilen über einen Ventilkopf. Allein durch die Form des Ventilkopfes und seiner Position im Ventilsitz kann hierbei Einfluss auf den Volumenstrom relativ zur Stellung des schrittmotorbetriebenen Ventilschafts genommen werden.

Es hat sich jedoch gezeigt, dass für die Anwendung der Gasregulierung in einem Heizgerät gilt: Je kleiner die Wärmeanforderung und somit der benötigte Gasvolumenstrom ist, desto feiner ist die erforderliche Stufung in der Gasvolumenstromregulierung. Zum Beispiel - während bei thermischer Volllast der Unterschied eines Öffnungsschrittes gängiger Gasarmaturen in der Luftzahl λ einen Unterschied von ca. 0,005 ausmacht, erhöht sich der Unterschied bei Teillast auf 0,05.

Im thermischen Teillastbetrieb wird also die prozentuale Änderung eines Öffnungsschrittes auf den Volumenstrom stetig größer. Durch diese Regelcharakteristik nimmt die Genauigkeit der Gemischbildung im thermischen Teillastbereich gravierend ab und kann unter Berücksichtigung weiterer Toleranzen letztlich limitierend auf die mögliche minimale Modulation des Heizgerätes wirken.

Erfindungsgemäß ist der Ventilkopf, der durch seine Geometrie und seine Positionierung im Ventilsitz den Gasvolumenstrom reguliert, koaxial mehrteilig ausgeführt, sodass ein mehrstufiges Öffnen bzw. Schließen der Gasstelleinrichtung ermöglicht wird. Dadurch kann eine erste Stufe für große Gasvolumenströme und eine zweite Stufe für kleine Gasvolumenströme realisiert werden.

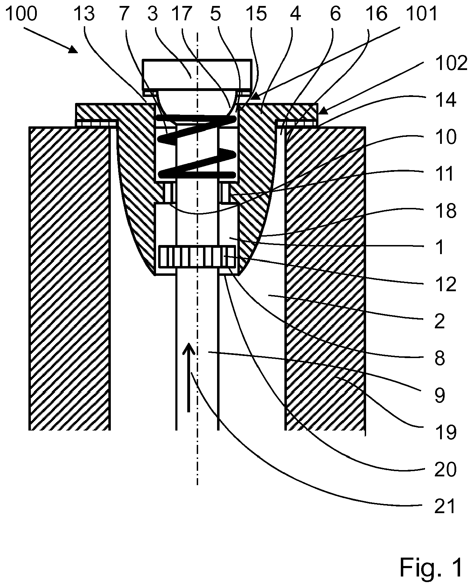

Die Erfindung wird nun anhand der Figur 1 detailliert erläutert.

Figur 1: Querschnitt des zweistufigen Ventils

Als Ausführungsbeispiel wird in Figur 1 ein zweistufiges Gasventil 100 dargestellt, das ein zweites Teilgasventil 101 und einen erstes Teilgasventil 102 umfasst. Die Teilgasventile 101, 102 sind konzentrisch angeordnet und werden über einen gemeinsamen Ventilschaft 9 kontinuierlich durch einen hier nicht dargestellten Linearantrieb, beispielsweise einer Schrittmotor-Gewinde-Kombination, betätigt. Das erste Teilgasventil 102 umfasst den ersten Ventilkopf 4, der mittels eines Ventilschafts 9 in einem Rohr 19 geführt wird, welches den ersten Kanal 2 bildet. Das Rohr 19 hat im Bereich des ersten Ventilkopfs 4 eine erste Innenkontur 16, die mit der ersten Außenkontur 18 des ersten Ventilkopfes 4 einen ersten Ringspalt 6 bildet. Im Betrieb wird durch das Rohr 9 Gas geleitet, dass durch den ersten Ringspalt 6 dosiert wird. Der Ventilschaft 9 ist axial verstellbar. Aufgrund der sich nach unten verjüngenden ersten Außenkontur 18 vergrößert sich der Querschnitt des ersten Ringsspalts 6, wenn Ventilschaft 9 nach in Öffnungsrichtung 21 oben gedrückt wird.

Um auch geringe Gasmengen sicher dosieren zu können, ist in dem ersten Ventilkopfes 4 ebenfalls eine Bohrung eingebracht, durch die Gas durch den zweiten Kanal 1 geleitet werden kann. In dieser Bohrung ist der zweite Ventilkopf 3 eingebracht, der prinzipiell genauso wie der erste Ventilkopfes 4 so zusammenwirkt, dass die zweite Innenkontur 15 und die zweite Außenkontur 17 des zweiten Ventilkopfes 3 einen Ringspalt 5 bilden, der sich mit einer axialen Bewegung des Ventil 9 nach oben hin vergrößert. Dabei ist der Ventilschaft 9 im inneren des ersten Ventilkopfes 4 mit Führungen 8, 10 geführt. Eine Druckfeder 7 übt eine Druckkraft zwischen dem zweiten Ventilkopf 3 und dem ersten Ventilkopf 4 aus, so dass der erste Ventilkopf 4 den ersten Ringsspalt 6 bei geringem Hüben des Ventilschafts 9 verschließt.

Die Öffnungsvorgänge des zweiten Teilventils 101 und des ersten Teilventils 102 sind wie folgt koordiniert. Bei einer geringen Hubbewegung des Ventilschafts 9 nach oben ausgehend vom geschlossenen Zustand des Gasventils 100 öffnet sich zunächst der Ringsspalt 5, da die Druckfeder 7 den ersten Ringspalt 6 verschließt. Bei einer weiteren Hubbewegung des Ventilschafts 9 werden die Führungen 8, 10 gegeneinander gedrückt, so dass eine weitere Hubbewegung des Ventilschafts 9 bewirkt, dass auch der erste Ventilkopf 4 nach oben bewegt wird und sich der erste Ringsspalt 6 zunehmend mit einer weiteren Hubbewegung des Ventilschafts 9 geöffnet. Dabei sind in den Führungen 8, 10 durchströmt Öffnungen 11, 12 in Form von Lücken, Bohrungen oder Aussparungen vorgesehen, die eine Strömung des Gases durch den ersten Ventilkopfes 4 ermöglichen.

Die Eine Druckfeder 7, die ebenfalls koaxial im zweiten inneren Kanal 1 des zweiten größeren Ventilkopfes 3 liegt, ist so angeordnet, dass sie den zweiten, kleineren Kanal 1 solange durch Federkraft geöffnet hält, bis der zweiten außenliegende, größere Ringspalt 5 vollständig geschlossen ist. Die Schritte zum vollständigen Schließen des Ventilkopfes werden demnach nicht über den größeren außenliegenden Ringspalt 6 generiert, sondern über den ersten kleineren, innenliegenden Ringspalt 5. Damit sich der zweite Ventilkopf 3 und der Ventilschaft 9 koaxial relative zueinander bewegen können befinden sich an beiden Bauteilen 3, 9 Führungen 8,10 mit Durchströmungsöffnungen 11, 12, die so gestaltet sind, dass sie ein Passieren des Gasvolumenstroms durch den zweiten Kanal 1 zum zweiten Ventilkopf 3 ermöglichen und daher keinen massiven Ring darstellen. Die Führung 10 am ersten Ventilkopf 4 hat zudem die Funktion, die Druckfeder 7 in Position zu halten.

Durch das zweistufige Schließen wird bei kleineren benötigten Gasvolumenströmen die Auflösung der Dosierung verbessert, wodurch Heizgeräten eine höhere thermischer Modulationen ermöglicht wird.

Das erfindungsgemäße Gasventil ist mit einem Sicherheitsventil und optional mit einem Druckregler gemäß dem Stand der Technik kombinierbar.

### Bezugszeichenliste

- 1: Zweiter Kanal
- 2: Erster Kanal
- 3: Zweiter Ventilkopf
- 4: Erster Ventilkopf
- 5: Zweiter Ringspalt
- 6: Erster Ringspalt
- 7: Druckfeder
- 8: Zweite Führung
- 9: Ventilschaft
- 10: Erste Führung
- 11: Durchströmöffnungen der ersten Führung
- 12: Durchströmöffnungen der zweiten Führung
- 13: Zweiter Ventilsitz
- 14: Erster Ventilsitz
- 15: Zweite Innenkontur
- 16: Erste Innenkontur
- 17: Zweite Außenkontur
- 18: Erste Außenkontur
- 19: Rohr
- 20: Bohrung
- 21: Öffnungsrichtung
- 100: Gasventil
- 101: Zweites Teilgasventil
- 102: Erstes Teilgasventil

## Patentansprüche

1. Gasventil umfassend einen ersten Ventilkopf (4) der mittels eine Ventilschafts (9) axial kontinuierlich verstellbar ist und so mit einem Rohr (19) zusammenwirkt, dass zwischen einer ersten Innenkontur (16) des Rohres (19) und einer ersten Außenkontur (18) des ersten Ventilkopfes (4) ein erster Ringspalt (6) gebildet wird, wobei die erste Innenkontur (16) und die erste Außenkontur (18) so geformt sind und so zusammenwirken, dass sich mit axialer Bewegung des Ventilschafts (9) in eine Öffnungsrichtung (21) die Querschnittsfläche des ersten Ringspalts (6) vergrößert, **dadurch gekennzeichnet, dass** der erste Ventilkopf (4) eine Bohrung (20) aufweist, in der koaxial ein zweiter Ventilkopf (3) eingebracht ist, und dass der zweite Ventilkopf (3) mittels des Ventilschafts (9) axial verstellbar ist und so mit der Bohrung (20) zusammenwirkt, dass zwischen der zweiten Innenkontur (15) der Bohrung (20) und der zweiten Außenkontur (17) des zweiten Ventilkopfes (3) ein zweiter Ringspalt (5) gebildet wird, wobei die zweite Innenkontur (15) und die zweite Außenkontur (17) so geformt sind und so zusammenwirken, dass sich mit axialer Bewegung des Ventilschafts (9) in Öffnungsrichtung (21) die Querschnittsfläche des zweiten Ringspalts (5) vergrößert.

2. Gasventil nach Anspruch 1, **dadurch gekennzeichnet, dass** der zweite Ventilkopf (3) direkt mit dem Ventilschaft (9) verbunden ist und das der erste Ventilkopf (4) mittels Führungen (8, 10) axial beweglich auf dem Ventilschaft 9 geführt ist und mittels einer Feder, bevorzugt einer Druckfeder (7) axial entgegen der Öffnungsrichtung (21) vorgespannt ist.

3. Gasventil nach Anspruch 1 oder 2, **dadurch gekennzeichnet, dass** die Querschnittsfläche des ersten Ringspalts (6) im geöffneten Zustand des Gasventils größer als die Querschnittsfläche des zweiten Ringspalts (5) im geöffneten Zustand des Gasventils und ist.

4. Gasventil nach einem der Ansprüche 1 bis 3, **dadurch gekennzeichnet, dass** das Gasventil so ausgebildet ist, dass ausgehend von einem geschlossenen Zustand bei einer Bewegung des Ventilschafts (9) in Öffnungsrichtung (21) zunächst der zweite Ringspalt (5) geöffnet wird und danach der erste Ringspalt (6) geöffnet wird.
